# EUROPEAN PATENT APPLICATION

(11) **EP 1 195 705 A1**
(43) Date of publication of application: **10.04.2002**
(21) Application number: 01304503.4
(22) Date of filing: 22.05.2001
(51) Int. Cl.: G06F 17/60

(54) **Method of performing transactions in an information technology network**

(30) Priority: 06.10.2000 US 238699 P
(71) Applicant: Hewlett-Packard Company, Palo Alto, CA 94304 (US)
(72) Inventor: Carroll, Jeremy, Golden Hill, Bristol BS9 4SW (GB); Hertling, William, Portland, Oregon 97213 (US)
(74) Representative: Jones, Bruce Graeme Roland

(57) **Abstract**

Commercial objects sought in the course of transactions within an information technology network are identified using a reference identifier which is unique within the network. The identifier may additionally be used to locate a provider of such a commercial object within the network. The identifier is stored in an e-services layer of computing capability which is distributed across the network, and which provides language independence as well as database functions to enable searching for providers of goods or services available via the network. The identifier migrates with the object, and information representative of the object (representative information), yet does not itself change upon object metamorphosis. The identifier may be duplicated where each instance of the identifier is equivalent *vis a vis* the object, but may not be re-used to identify a different object

## Description

The present invention relates to transactions within an information technology network, and more particularly to the process rules governing the manner in which commercial transactions, such as enquiries for products or services, negotiation and conclusion of contracts, and the assignment of obligations under a contract are carried out. in such a network, for example.

An information technology network may be defined as a plurality of computing entities comprising information storage and/or processing elements, wherein each entity is linked to at least one other entity via a telecommunication link of some description. The storage and processing elements may be of any type. Thus for example, a processing element may be provided by a software program, or by a microprocessor, and a storage element may be any form of memory from which information is retrievable, ranging from simply a register in a processor to a hard disk drive for example. Frequently an entity may comprise both storage and processing capability (such as PC's for example). Such networks are predominantly electronically based (i.e. the processing and transmission of data takes place electronically), but other processing and storage media (such as optical and quantum) are also possible. One example of an information technology network is a local area network (LAN) linking several personal computers (PC's) together, for example within a particular company; a much larger network is the Internet, a world-wide network of computing entities linked by telephone lines and other telecommunication links.

The operation of the information processing and storage elements within a network will be controlled by one or more computer programs. For example control of the most fundamental aspects of one or more of the entities within the network, such as the manner in which data is received, stored and processed, and the manner in which information is relayed to a user, is performed by a program known as the operating system. This type of program is frequently referred to as a low-level program because its processes are closely related to the manner in which physically embodied storage and processing elements ("hardware") operate. Further programs which perform higher level functions, such as word-processing, the management of email and so on, are usually adapted to run in conjunction with the operating system (although they are nonetheless distinct), and are sometimes referred to as running "on top" of a particular operating system, this being an indication of the fact that such "applications" programs are higher level programs than the operating system, which interact with the operating system, and which therefore must be compatible with it. In an information technology network a particular program may be stored at one or more locations, or merely at a number of connection points (known as nodes) between entities of the network, provided that its computing capability is available to those users of elements of the network that require it. A program stored in one location may be executed in another distinct location, and so from a functional point of view, such computing capability can be thought of as being ubiquitous throughout a network although the program or programs that provide it to the user may not be. In such a situation this hierarchical architecture of such programs may be thought of in somewhat abstract terms as a plurality of layers of distributed computing capability.

The advent of large scale networks, such as the internet, in which many different and distinct commercial undertakings own one or more of the computing entities that comprise the network has enabled the conduct of commercial transactions across such a network. A transaction is, in effect, any interaction across a network which involves more than a single party (regardless of whether the or each party to a transaction is a program - automated or otherwise, or a legal or natural person), and examples of transactions include enquiries as to the availability of one or more products and/or services, negotiating on the nature or price of products and/or services it is now possible to enquire on the availability of a particular type of holiday, and negotiation and conclusion of a contract for the purchase of such a holiday. Frequently however it is contended that at present the performance of such networks prevents the conduct of such transactions. The present invention provides a protocol for transactions across an information technology network which increases the versatility of a given network without any modification of the network infrastructure (i.e. the telecommunications links, processing, and storage elements of the network).

A first aspect of the present invention provides a method of conducting commercial transactions in a public information technology network which has an e-service layer of computing capability available to users of the network, and which acts at least as a directory of available commercial products and/or services accessible via the network, the method including the steps of:
initiating by means of at least a first processing element within the network, a first commercial transaction seeking a second processing element within the network via whom a commercial object may be obtained;
assigning a reference identifier to the commercial object, the reference identifier being unique within the network; and
storing the reference identifier in a memory associated with the e-service layer in a manner which enables the reference identifier to be linked to the commercial object to which the reference identifier relates.

The commercial object may be a single product, or a single service, or alternatively a bundle of products and/or services which a party (on behalf of whom the first processing element is operating) is enquiring about, or which the party is actually, or is seeking to, or is even contemplating dealing in. Examples of a commercial transaction are for example buying, selling, leasing, licensing, or concluding a contract in which one or more of such products or services are specified.

A further and independent aspect of the present invention, the reference identifier is stored in a manner which enables the address of the second processing element within the network to be retrieved from the e-service layer. Accordingly, a further independent aspect of the present invention provides a method of conducting commercial transactions in a public information technology network which has an e-service layer of computing capability available to users of the network, and which acts at least as a directory of available commercial products and/or services accessible via the network, the method including the steps of:
initiating by means of at least a first processing element within the network, a first commercial transaction seeking a second processing element within the network via whom a commercial object may be obtained;
assigning a reference identifier to the commercial object, the reference identifier being unique within the network; and
storing the reference identifier in a memory associated with the e-service layer in a manner which enables the details of the second processing element to be retrieved from the e-service layer using the reference identifier.

In addition to the above methods, further aspects of the present invention provide alternative methods as well as systems and apparatus' for performing commercial transactions in an information technology network.

Embodiments of the invention will now be described, by way of example, and with reference to the accompanying drawings, in which:
Figs. 1 to 8 are illustrations of a scenario in which the method of the present invention may be put into effect;
Fig. 9 is a schematic illustration of one form of representative information; and
Fig. 10 is a schematic illustration of the architecture of a computer entity which forms part of a network according to the present invention.

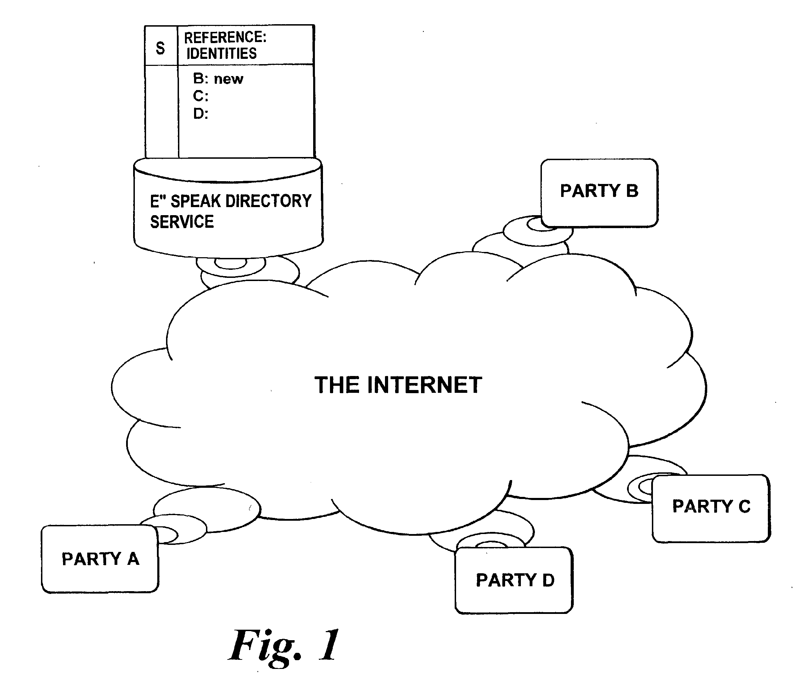

Referring now to Fig. 1, an information technology network 10 "The Internet" is illustrated schematically. While the present invention is not limited to the Internet, several aspects of the Internet are illustrative of the broad meaning ascribed to the term "information technology network" used in this specification. Firstly, the amorphous manner in which the network 10 is illustrated is intended to denote the ill-defined nature of the network, in that the number, nature and distribution of storage and/or processing elements which comprise the network are neither necessarily constant nor controllable, while at least some of the telecommunications links which go to make up the network may be considered to be ephemeral since they are effectively only part of the network when a user elects to connect to the network via a particular telecommunications link (although none of these aspects of the network are to be considered as essential). Furthermore, the network is a public network, so that, for example there are no restrictions (other than having requisite computing capability, which is widely available) to becoming a part of the network. However, no implication that access to the network is necessarily free of charge or, necessarily available without agreeing to certain terms and conditions is intended.

For the purpose of the present example we shall consider the actions of four parties A, B, C, D connected to the network, each of which is a processing element in the form of a software program. The illustration of the parties A, B, C as distinct from the network is intended only to enable easier understanding of the present invention, and it is to be understood that each of these parties is incorporated into a computing entity that is a part of the network 10, even though they are illustrated distinctly. The software programs A, B, C, D operate on behalf of persons α, β, γ, δ respectively, who in the majority of cases would have little or no involvement in a transaction beyond their ownership of the programs which operate on their behalf. They have been referred to herein however, since the present example will illustrate a scenario which demonstrates the versatility of the present invention. In the present example person α is an individual seeking to book a holiday, person β is a Travel Agent who is essentially a broker or seller or holidays, while persons γ and δ are tour operators who actually provide holidays.

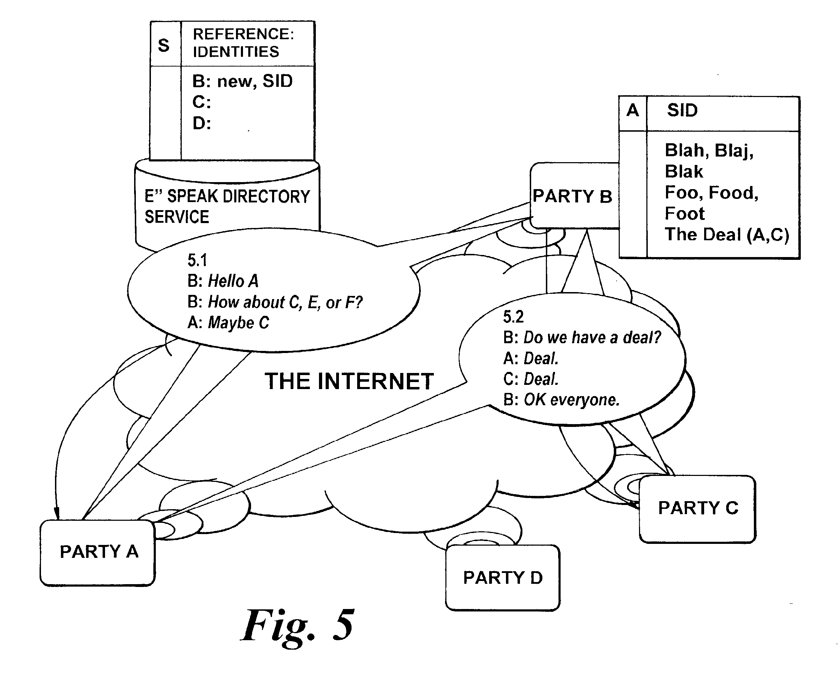

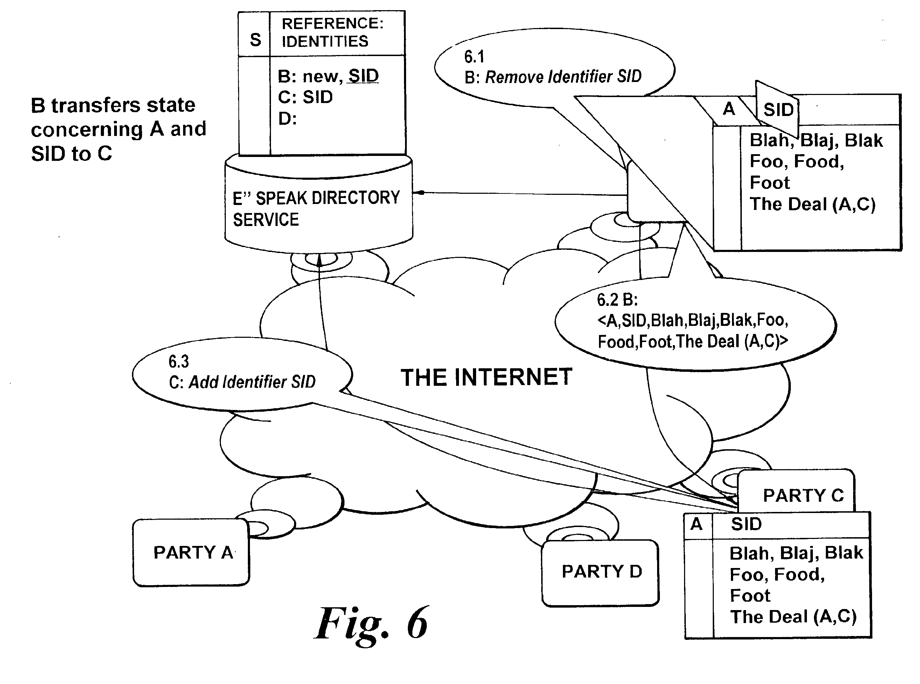

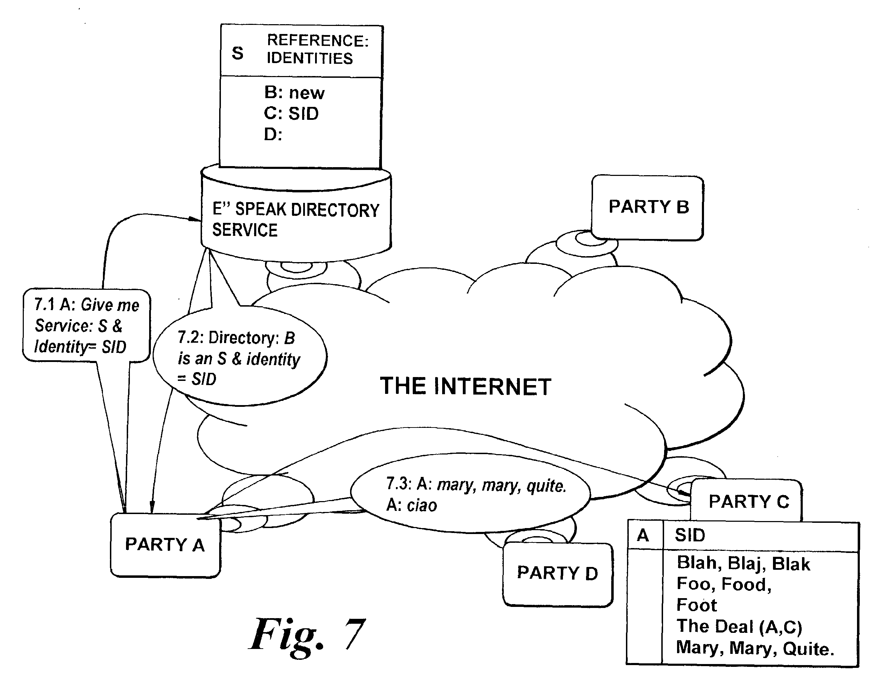

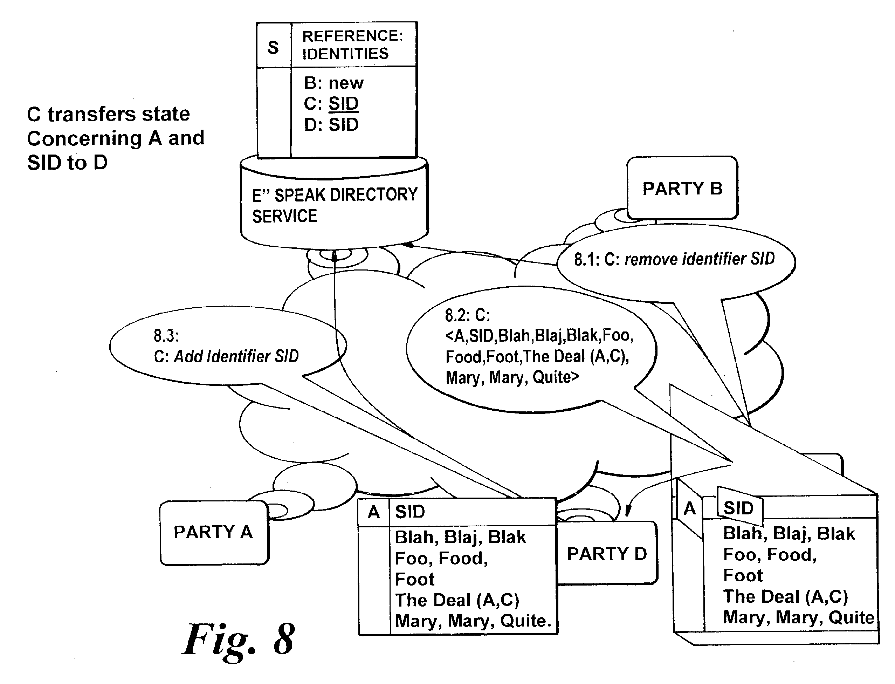

The programs A, B, C, D all operate on top of an e-service layer 12 of computing capability (which although illustrated discretely in Figs. 1 to 8 is a distributed layer of computing capability present at the sites of the four programs A, B, C, D), which is freely available throughout the network 12 to any user that wishes to incorporate such a layer of capability into their system, and which is able to detect the presence (and therefore the absence) of such a layer in another user's processing hierarchy. Thus all networking operations of a particular commercial nature and which are performed by the programs A, B, C, D operate via the e-service layer 12, meaning effectively that any data directed to a program A, B, C, D passes first through the e-service layer 12 (although many networking operations of a different nature, such as Domain Name Service involves communication between computing entities across the network at a level which does not pass via the e-service layer). The e-service layer 12 includes what is effectively a look-up table, known henceforth as an e-service directory 14 of services available via the network 10 (that also operate on top of such a e-service layer 12), and additionally performs various processing and storage operations on relevant data which passes across the network between processing elements (such as the programs A, B, C, D) which operate on top of the e-service layer 12. Such operations include encryption, logging of transactions (and as a sub-function of logging, billing where this is appropriate), and importantly in connection with a network such as the internet, the provision of language independence, so that processing and storage elements which operate on the basis of instructions formulated in different computer languages can interact with each other via the e-service layer 12. An example of such a layer of computing capability is Espeak, version 2.02 provided by the Hewlett-Packard Co, of Palo Alto California USA, which is available via the internet, and which is described in more detail in its user manual, the contents of which are hereby incorporated by reference.

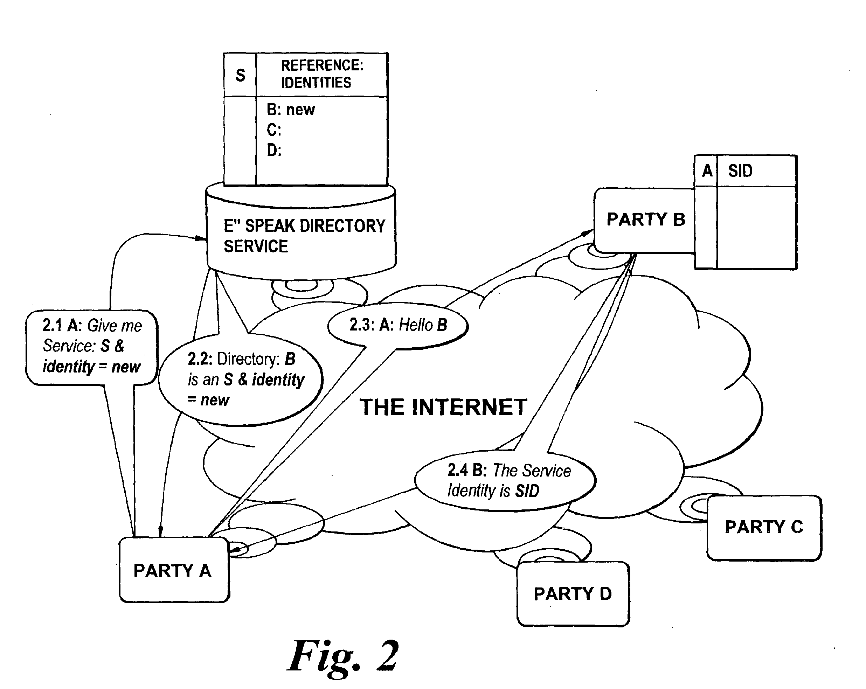

Referring to Fig. 2, a commercial transaction is initiated at Step 2.1 by Party A, which is a software program dedicated to searching and processing requests for holiday services (similar to, for example, "OAG Flightdesk" - a commercially available program dedicated to searching for airline timetable information) at the behest of person α. In the present example this transaction is a search by Party A for a commercial object O_{c}, which in this example is a bundle of holiday services desired by person α. In particular Party A is seeking to find a holiday to a particular part of the world, for a specified duration, and at a particular time of year, which also includes a number of activities (e.g. sightseeing) while at the intended destination, as well as ancillary transport services such as taxis to and from the various airports to or from which person α intends to fly. To initiate this transaction, Party A generates an enquiry to identify parties who are part of the network and are able to provide such a commercial object (either directly or by via a third party), and the enquiry is then launched into the network 10 via the e-service layer 12.

This step is implemented as follows. Person α is initially asked by Party A to specify his holiday requirements (i.e. to provide information representative of the commercial object, known as the representative information), in appropriate detail, typically by responding to prompts on a screen displaying a number of search options. Person α then causes Party A to search the e-services layer for appropriate providers on the basis of this representative information.

Party A will have "hard-coded" (i.e. included in its operating capability *ab initio*) the name of a list of the operations, known as "functions" or "methods", which parties who are listed in the e-services directory as holiday service providers, such as travel agents and tour operators, must be able to perform. Examples of these functions are: create new holiday request; modify holiday request; retrieve holiday request details from memory; cancel holiday request; search available holidays; and retrieve available holidays from memory. This list is known in computing vernacular as the "Holiday Service Interface" (and in e-speak 2.02 would be implemented using J-ESI). Party A will also have hard-coded those functions of the Holiday Service Interface which it requires in order perform its intended purpose. Further, the e-services layer will contain information distinguishing one category of holiday service provider from another, e.g. a travel agent from a tour operator.

On receipt of a command to execute the search as specified, Party A seeks within the e-services directory 14 a party operating in accordance with ("implementing") the Holiday Services Interface, and who is identified as a travel agent. In the course of this search Party A finds Party B.and Following identification of Party B by the e-service layer 12, the e-service layer 12 notifies Party A, in Step 2.2, that Party B is a party who may be able to provide the object O_{c}, i.e. Party B is capable of offering the bundle of holiday services sought by Party A.

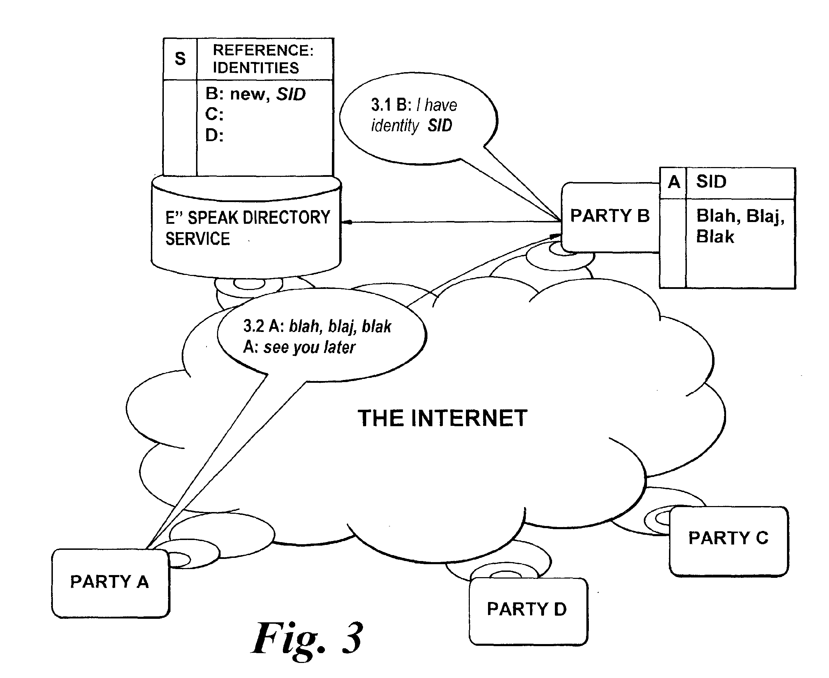

In Step 2.3 Party A then connects to Party B (Party B being active on a server which is operational 24 hours a day, 7 days a week, and will therefore be receptive whenever Party A seeks to establish contact) across the network 10 via the e-service layer, and Party A requests execution of the "create new holiday request" function ("calls" the function), whereupon Party B executes the function, and in Step 2.4 generates a unique reference identifier SID in connection with the object O_{c} which Party B then returns to Party A. Referring now additionally to Fig. 3, in Step 3.1 Party B then addresses the e-service directory 14 to advertise the reference identifier SID, which is linked in the e-services layer to the address of Party B (and thus the identity of Travel Agent β). In technological terms this linking may be implemented by adding an extra row to the database which provides the e-services directory, the row containing, the name of the Holiday Services Interface, a name for Party B and the identifier SID. The reference identifier SID is also linked to any representative information of the commercial object (and thereby to the object itself) which Party B may have at this stage, and which is stored within storage elements of Travel Agent (3 which are not available via the network.. This latter linking may be implemented in a similar manner therefore, but within a "private" database owned by Travel Agent β..

The unique reference identifier SID may be duplicated many times in the e-services layer. This apparent contradiction is explained as follows. Travel Agent β, on whose behalf Party B is operating may have branches in a number of parts of the country, each of which has its own software program B₁, B₂, ... Bₙ. Each of these Parties B is equivalent from the point of view of the Party A as long as the commercial object O_{c} does not include a desired element which would create a distinction between the Parties B. Such a distinction might be created by an element of the commercial object such as, for example, that Person α wishes to collect the tickets by hand, or to go into a local branch of the Travel Agent β on whose behalf Party B operates. In this instance, only those Parties B which can provide all those elements of the commercial object remain equivalent to Party A *vis a vis* the commercial object (e.g. in this example only those Parties B which represent branches close enough to the home of Person α for Person α to call into the branch conveniently). Duplication of the reference identifier is thus valid when each instance of the identifier is linked to an equivalent Party. Thus, where Parties B₁ and B₃ are equivalent, then both will advertise the reference identifier SID in the e-services layer 12. It should further be noted that in this specification therefore, a reference to a Party (e.g. Party B) in the singular includes within its scope plural equivalent Parties.

The notion of equivalence enabling duplication of the reference identifier should not however be confused with re-use of the identifier. Thus where a different commercial object comprising exactly the bundle of holiday service desired by Person α is the subject of a search initiated by a further Person, Party B would create a new unique reference identifier in relation to that commercial object.
Following advertisement of the reference identifier SID in the s-services directory, Party A then contacts Party B once again in Step 3.2, wishing further to specify some of Person α's requirements to Party B. To this end, Party A calls a "modify holiday request" function, which party B executes in accordance with information from Person α, illustrated in Fig. 3 as "Blah, Blaj, Blak". The information "Blah, Blaj, Blak"conveyed by Party A on behalf of Person α must conform to what is known as an "Information Model", this being a set of information (agreed upon in advance by holiday service providers implementing the Holiday Service Interface) which has meaning. Thus for example if the Information Model does not include whether a seat on a plane is a smoking or non-smoking seat, Party A is not permitted to submit smoking or non-smoking preferences (i.e. Party B will return an error message to Party A) because they cannot be acted upon. The information "Blah, Blaj, Blak" is used to update the representative information of the commercial object O_{c}, which is stored within the storage elements controlled by Party B which are not accessible via the network 10.

Once this interaction is completed, Party A disconnects from the network (i.e. closes the session in the e-service layer, and closes the layer itself); Party A may or may not physically disconnect, or even switch off.

Generation of a unique reference identifier typically takes place within the processing and/or storage elements which are operating on behalf of the Travel Agent β, which in this instance is Party B, and the process of generating a unique reference identifier is known *per se.* Briefly, a given set of storage and processing elements forming a computer located at the premises of undertaking γ are connected via a local area network card, to a local area network; each such card has a reference identifier known as a MAC address. Each MAC address is unique (c.f. for example chassis numbers of vehicles), and so a reference identifier based upon the MAC, but also containing additional reference characters will enable distinction between different reference numbers generated from the same computer, and thus having the same MAC. Thus for example the sequence of reference identifiers from a given computer could be MAC1, MAC2...., MACn. Since MAC is unique, each reference identifier in the sequence will be unique. The meaning of unique in connection with the present invention will depend upon the context: the reference identifier must be unique within the network within which it is being used. Where the network is effectively without boundary, as is the case in the internet, then a reference identifier that is absolutely unique is required; however where the network has a controllable and defined boundary, a reference identifier used according to the invention may be the same as an identifier used outside the network, provided that it still remains unique within the network. Other methods of generating a unique identifier are known *per se,* for example for use in conjunction with computers which do not have a LAN card.

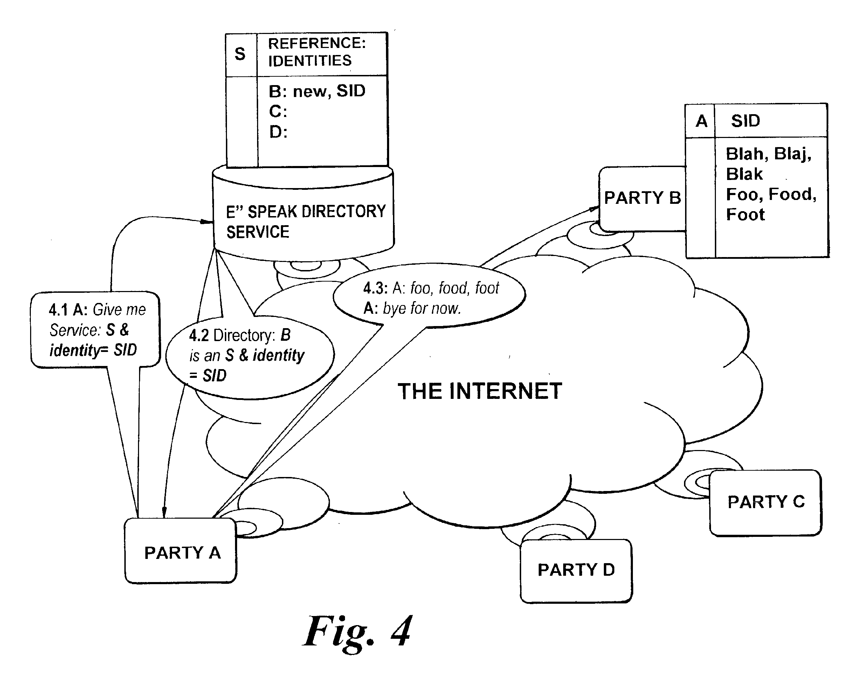

Subsequently, Party A has a change of requirements in respect of the bundle of holiday services sought; i.e. there is a change to the commercial object. This may happen for example because person α, on whose behalf Party A is operating has changed their mind about the exact nature of the holiday they want; for example they may wish to add a particular type of day trip to the holiday service that they are seeking. Party A therefore once again initiates a search (at Step 4.1) within the e-service directory 14 for the reference identifier SID, and at Step 4.2 the e-service layer 12 finds Party B as a Party advertising the identifier SID. Having found Party B once again, Party A then connects once again to Party B at Step 4.3, and updates its requirements in connection with the various holiday service it requires by calling the "modify holiday request" function. Party B executes the function and modifies (either by removal, addition or alteration of one or more of the products and/or services) the representative information stored within its non-network accessible storage elements, taking account of the interaction illustrated in Fig. 4 by "Foo, Food, Foot". It should be noted that, at this stage in proceedings, modification of the representative information of the object O_{c} is only possible by, or with permission of Party B, the Party that generated the reference identifier SID to which the object (and its representative information) are linked, and the party that advertised the identifier SID in the e-services directory 14.

Party B then looks through a database (owned by Party B and created by tour operators who are registered with Party B) to locate a tour operator capable of providing the various elements of the commercial object. Upon identifying a number of such tour operators, Party B issues requests via the e-services layer to software programs C, E and F operating on behalf of these tour operators, to search their booking systems to see whether the holidays are still available. In issuing such requests Parties B, C, E and F all implement the Holiday Service Interface, and so Party B calls, and Parties C, E and F execute the same functions as were called and executed by Parties A and B above.

Having identified three suitable candidate holidays, Party B then connects to Party A (Step 5.1) and starts negotiation about which of the three holidays to book with Party A. The connection to Party A is not necessarily via the network, since Party A is not necessarily going to be active at a time when Party B is seeking to contact Party A (for example because α has not switched on his computer), and so may be via a telephone voicemail message or an email message, for example, indicating that Party B is now ready to interact with Party A over the network. During the course of the negotiation, Party A chooses the bundle of holiday services offered by tour operator C. Step 5.2 follows, during which the Parties A, B and C are all in contact for the purpose of concluding the necessary contracts between Persons α and γ (for the purchase of the holiday services), and Persons β and γ (for the provision of commission to β for its part in the sale of γ's holiday services). The contracts are concluded, and all parties disconnect from the network 10. During the course of these negotiations the Persons α, β and γ may or may not be involved; in one scenario the Persons α, β and γ engage in the negotiations only in the role of a "help desk" (i.e. in the event that something happens during the course of the negotiations which cannot be dealt with by Parties A, B and C). In the preferred embodiment of this scenario, Person α is involved in the conclusion of contracts because of the potential complexity of selecting a suitable holiday. Furthermore, Travel Agent β may need to be involved where the holiday involves the provision of ancillary services, such as a taxi for example; Tour Operator γ would normally have a booking system (Party C) of sufficient complexity to be able to deal with this interaction automatically.

Following conclusion of the contracts, Party B no longer wishes to advertise the reference identifier SID. The identifier SID no longer relates to a commercial object comprised of a bundle of holiday services desired by Person α, since the object O_{c} has now metamorphosised into a bundle of holiday services which Person α has purchased. Party B and Travel Agent β therefore no longer have any commercial reason to advertise the reference identifier SID, because they have no commercial dealings with such a commercial object post-metamorphosis. At Step 6.1 therefore, Party B removes advertisement of the reference identifier SID from the e-service directory 14, and at Step 6.2 passes the identifier SID and the representative information to Party C (including information updating information derived from the interaction leading to the conclusion of the contracts). Once again, the representative information is stored by Party C within storage elements which do not form part of the network 10, and it is stored in a manner such that it is retrievable by reference to the identifier SID, which Party C then advertises in the e-service directory in a manner that enables retrieval of the identifier to lead to the ability to contact Party C.

It should be noted that during the course of the process thus described, both the representative information of the object O_{c}, and the reference identifier SID for the object have migrated from one business to another. Additionally the object O_{c} has metamorphosised during the course of its connection with the reference identifier SID, i.e. from a bundle of holiday services which is available for sale, to a bundle of purchased holiday services which a tour operator γ is now contractually obliged to provide to Person α.

Party A subsequently has a further change of requirements (for example Person α may now wish to stay an extra night at the intended destination), and once again, using the e-service directory 14 at Step 7.1, seeks to find reference identifier SID; at Step 7.2, the e-service directory 14 finds, by virtue of its connection with the reference identifier SID, Party C, who has undertaken to provide this bundle of holiday services. Using this information, Party A connects to Party C, whereupon he updates his requirements (which may or may not require some amendment to the existing contract between Persons α and γ, depending upon the nature of the requirement changes) at Step 7.3, and disconnects from the network 10. The further modifications to the object O_{c} resulting from the amended requirements of Party A, are performed by Party C, and information from the interaction at which these updated requirements were conveyed, "Mary, Mary, Quite." is again used by Party C to update the representative information of the object O_{c}.

Before α has his holiday, Tour Operator γ (on whose behalf Party C is operating) goes bankrupt. Under the holiday guarantee scheme, all of Tour Operator γ's obligations relating to contracts for the bundle of holiday services which comprise the object O_{c}, and which Tour Operator γ still has to deliver are taken on by a further Tour Operator, δ. As a result of Tour Operator γ's bankruptcy, all of Party C's holidays which are advertised in the e-services directory are withdrawn (including the object O_{c} advertised by the reference identifier SID) at Step 8.1, and at Step 8.2 Party D, acting for Tour Operator δ is passed the representative information and the reference identifier SID. Party D then advertises the reference identifier SID in the e-services directory at Step 8.3.

These latter steps emphasise the value of the identifier aspect of the present invention. Person α will, at this point, still be able to have his holiday, with all of the ancillary services included without having to deal with any of the issues which would normally arise following bankruptcy of Tour Operator γ. The representative information of the commercial object O_{c} has passed to Tour Operator δ along with the reference identifier SID, and although (as noted above) the object O_{c} identified by the reference identifier SID has changed during the course of the various transactions, the reference identifier SID has enabled each interested party to obtain any necessary information on the object (via their contact with the Party in whose possession the object representative information is) represented by the identifier SID at each stage in the process of its metamorphosis.

In the example described thus far, the first person α is a buyer of the commercial object from a tour operator γ, with Travel Agent β acting as a broker for the sale. Other permutations of buyer and seller which result in a change of ownership of the commercial object and reference identifier are equally possible. Thus a purchase could be made by a first person α (who initiated an enquiry) from a second person β (who advertises), or by a third person γ from the second person β following an enquiry by the first person α made on behalf of the third person γ, and so on.

A reference identifier may relate to a commercial object which is comprised of a bundle of products and/or services, one or more of which are represented by a further reference identifier, representing a sub-group of the products and/or services which are a further commercial object in themselves.

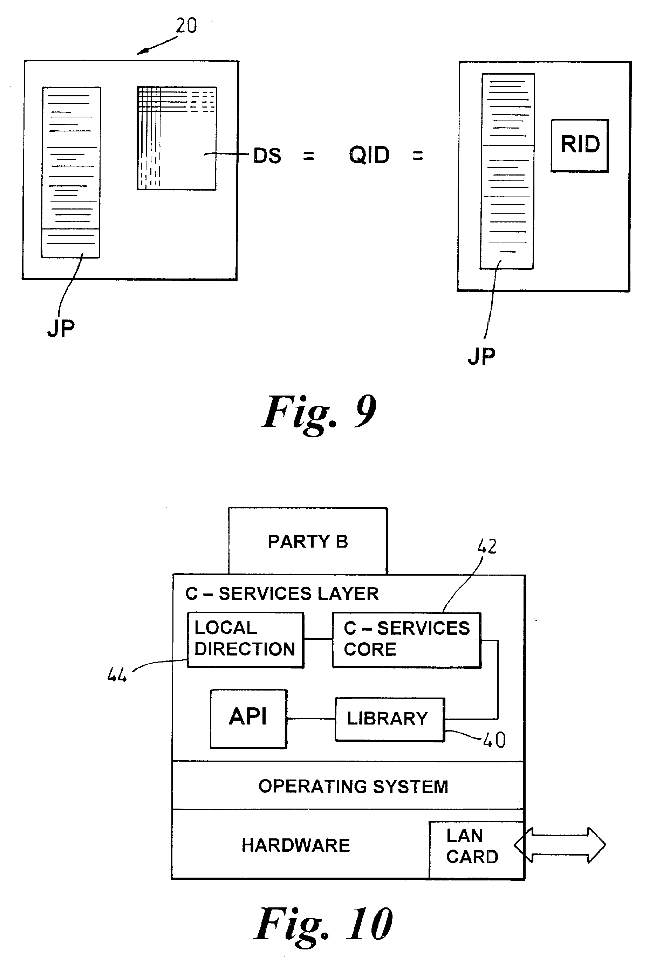

For example, a commercial object P_{c} may be a bundle of printing services desired by a person, such as a large number of posters of the Mona Lisa, of a particular size and quality, printed on a particular type of paper. In printing vernacular, the representative information of such a commercial object P_{c} is known as a "Job Ticket", and a conceptual representation of the Job Ticket 20 is shown in Fig. 9; it is identified by the reference identifier QID, which is the reference identifier advertised in the e-services layer in connection with an enquiry relating to the provision of the commercial object P_{c} which the identifier QID represents. The Job Ticket JT includes essentially two parts. The first part, JP relates to that part of the representative information relating to the nature of the printing job which is to be performed, i.e. the number of copies, the size of the page and nature of the paper to be printed on, and so on. The second part DS is known as the Data Store, and is the material which is to be reproduced; in this example an image of the Mona Lisa. Frequently it may be the case that the person responsible for executing the Job Ticket needs to seek, via the e-services layer, the Data Store (which in this example is an image of the Mona Lisa which is reproducible for printing purposes). In this case therefore, the Job Ticket representative of the commercial object P_{c} may be provided partly by information relating to the commercial object P_{c} in relatively explicit terms (in this case the elements of the Job Ticket which are not the Data Store), together with an identifier RID (provided by a further Party in response to a further search in the e-services directory for a Mona Lisa image) which effectively represents the Data Store by virtue of the advertisement of the identifier RID in the e-services layer by a Party X who can provide the Data Store. For an "explicit" representation of the object P_{c} therefore, it would be necessary to retrieve the information stored by Party X (in private - i.e. non-network accessible storage elements) relating to the provision of the Data Store, and to substitute that information for the reference identifier RID in the representation in the Job Ticket which itself represents the object P_{c}. Thus the identifier QID relates to an object P_{c} which is represented within the computer network by a combination of explicit information and a further identifier RID.

Referring now to Fig. 10, a computer system implementing an embodiment of the present invention is illustrated, in this case the computer system of Travel Agent β. The e-service layer, known *per se,* operates on top of an operating system OS, such as Unix, or Windows NT. In the majority of instances there are likely to be several layers of computing capability between the e-services layer and the operating system, and the presence of these interstitial layers (not shown) is indicated in Fig. 10 by the dashed lines. The operating system OS is itself depicted as being a layer of computing capability which sits on top of the system's computer hardware H/W, including such elements as the network connection hardware, which in this example is a Local Area Network module, known in computing vernacular as a LAN card, and via which all network communications pass.

Sitting on top of the e-service layer 12 is the business application program of Travel Agent β, i.e. Party B. The function of the business application programme is, for example in the case of the computer system of Travel Agent β, specially configured to enable it to perform those operations which are particular to the commercial domain of a travel agent. The e-service layer 12 has an application programming interface API, which is essentially a list of functions written in the programming language (e.g. C, Java, Pascal, Visual Basic or C#) used within the computer system of Travel Agent β, which are stored within a Library 40 and which are executable in a processing module of the e-services layer known as the e-services core 42. Functions (written in the computer language of the local system) called by the local computer system are output by the library in what may be thought of as commands to the e-core in the language of the e-service layer; henceforth within the e-services layer operations are language independent. In the case of a search command the e-core initially interrogates a local directory 44, held within the local computer system, which essentially forms one small part of the total e-services directory 14. The local directory 44 will contain that information most frequently retrieved by Party B from the e-services directory 24 (of which it forms a part). In the event that the local directory 44 does not have the required information, the search is passed on, to the e-core of another computer system within the network, and so on until the requisite information has been obtained, or all available local directories forming part of the e-services directory have been searched. Thus the e-services directory 14 is distributed throughout the network.

In an alternative embodiment, Party A may have, stored in a file which is part of the program, the address of Party B (acting on behalf of Travel Agent β); this is not unusual since the software program Party A may well have been furnished by a consortium of travel agents including β. Thus Party B is sought from within the program which is Party A, and this eliminates the need to searching the e-services directory for a Party such as Party B. In a further embodiment, having located Party B (either by searching the e-services directory, or from within its own program) Party A may generate the unique reference identifier SID, and pass this to Party B, typically when first contact is made, and preferably in conjunction with any representative information.

It should be noted that the various aspects of the present invention which are disclosed within the present application are not intended to be limited to their association with the embodiments in connection with which they were first described.

In the example disclosed herein, the reference identifier is retained within a memory (which may, for example be a distributed database) which is effectively part of the e-services layer. In an alternative but entirely equivalent embodiment, the reference identifier is stored within a memory which is not itself part of the e-service layer, for example a server owned by Travel Agent β. In this example, the e-service layer includes a search engine which searches various servers within the network, in order to identify to which party the identifier is linked. The search of data on the server may be either by the search engine actually having access to the server, or alternatively by interrogation of the server (e.g. "do you have the identifier SID" type question) without having access.

As has been described above, the reference identifier may be used to enable identification of a commercial object, and retrieval of information representative thereof, and so accordingly an independent aspect of the present invention provides a method of conducting a business transaction between first and second persons, the method comprising the steps of: enquiring whether the second person is capable of providing a commercial object derived by the first person; assigning a unique reference identifier to the commercial object; advertising the reference identifier in a publicly available, searchable directory; storing information representative of the commercial object in a manner enabling access to the representative information only by the second person, or with permission of the second person; and linking the identifier to the representative information, and thereby to the commercial object, so that retrieval of the identifier enables retrieval of the representative information.

Alternatively, the reference identifier may be used to enable contact to be made with a commercial person dealing in a commercial object, and so accordingly yet a further independent aspect of the present invention provides a method of conducting a business transaction between first and second persons, the method comprising the steps of: enquiring whether the second person is capable of providing a commercial object derived by the first person; assigning a unique reference identifier to the commercial object; advertising the reference identifier in a publicly available, searchable directory; storing information representative of the commercial object in a manner enabling access to the representative information only by the second person, or with permission of the second person; and in the publicly available directory, linking the identifier to information enabling contact to be established with the second person, so that retrieval of the identifier from the directory enables retrieval of contact information for the second person.

## Claims

1. A method of conducting commercial transactions in a public information technology network which has an e-service layer of computing capability available to users of the network, and which acts at least as a directory of available commercial products and/or services accessible via the network, the method including the steps of:
initiating by means of at least a first processing element within the network, a first commercial transaction seeking a second processing element within the network via whom a commercial object may be obtained;
assigning a reference identifier to the commercial object, the reference identifier being unique within the network; and
storing the reference identifier in a memory associated with the e-service layer in a manner which enables the reference identifier to be linked to the commercial object to which the reference identifier relates.

2. A method according to claim 1 wherein the reference identifier is assigned before initiating the first commercial transaction.

3. A method according to claim 1 wherein the reference identifier is assigned after initiating the first commercial transaction.

4. A method according to claim 1 wherein the reference identifier is assigned by the first processing element.

5. A method according to claim 1 wherein the reference identifier is assigned by the second processing element.

6. A method according to claim 4 wherein the reference identifier is passed to the second processing element by the first processing element.

7. A method according to claim 1 wherein the second processing element actuates storage of information representative of the commercial object in storage elements which are not accessible via the network without permission of the second processing element, and the reference identifier is linked to the commercial object via said representative information.

8. A method according to claim 1 wherein the reference identifier is stored in the memory associated with the e-services layer in a manner which enables an address within the network of the second processing element to be retrieved from the e-service layer using the reference identifier.

9. A method according to claim 1 wherein the step of storing the reference identifier within a memory associated with the e-services layer includes the step o f storing the reference identifier in a memory which is not part of the e-services layer, but which is searchable by the e-services layer in a manner enabling retrieval of details of the second processing element.

10. A method according to claim 9 wherein the memory is provided at least by a storage element operable by the second processing element.

11. A method according to claim 1 wherein the second processing element is one of a plurality of processing elements which are equivalent *vis a vis* the commercial object.

12. A method according to claim 1 wherein the commercial object is represented to a processing element within the network as a combination of information and a further unique reference identifier.

13. A method according to claim 12 wherein the further unique reference identifier is representative of a further commercial object, forming a subobject of the first-mentioned commercial object.

14. A method according to claim 7 wherein the first and second processing elements operate on behalf of first and second persons, the second person dealing in commercial objects of the type sought by the first transaction, the method further comprising the step of enabling retrieval from the memory associated with the e-service layer, of details of a second processing element operating on behalf of the second person.

15. A method according to claim 14 wherein the details of the second processing element include an address of the second processing element within the network, by means of which the second processing element may be contacted via the network.

16. A method according to claim 14 wherein modification of the representative information of the commercial object is possible only by the second processing element, or with permission of the second processing element.

17. A method according to claim 16 wherein modification to the representative information by an element other than the second processing element is possible subsequent to an exchange of messages with the second processing element.

18. A method according to claim 16 further comprising the steps of:
completing a second transaction involving at least one of the first and second processing elements, the second transaction including the step of concluding a contract relating to the commercial object sought in the first transaction, wherein at least one of the first and second persons are a party to the contract;
modifying the memory associated with the e-service layer to enable the reference identifier to be linked to at least an address within the network of a processing element other than the second processing element.

19. A method according to claim 18 further comprising the step of enabling said processing element other than the second processing element to modify the representative information.

20. A method according to claim 19 wherein the second transaction involves at least the first processing element, and a third processing element operating on behalf of a third person, wherein the parties to the contract are at least the first and third persons, and subsequent to conclusion of the contract the address of the third processing element is linked to the reference identifier, and the third processing element is able to modify the representative information.

21. A method according to claim 19 wherein the second transaction involves at least the first and second processing elements, and wherein the parties to the contract are at least the first and second persons and subsequent to conclusion of the contract the address of the first processing element is linked to the reference identifier, and the first processing element is able to modify the representative information.

22. A method according to claim 19 wherein the second transaction involves at least the second processing element, and a third processing element operating on behalf of a third person, and wherein the parties to the contract are at least the second and third persons, and subsequent to conclusion of the contract the address of the third processing element is linked to the reference identifier, and the third processing element is able to modify the representative information.

23. A method of conducting commercial transactions in a public information technology network which has an e-service layer of computing capability available to users of the network, and which acts at least as a directory of available commercial products and/or services accessible via the network, the method including the steps of:
initiating by means of at least a first processing element within the network, a first commercial transaction seeking a second processing element within the network via whom a commercial object may be obtained;
assigning a reference identifier to the commercial object, the reference identifier being unique within the network; and
storing the reference identifier in a memory associated with the e-service layer in a manner which enables the details of the second processing element to be retrieved from the e-service layer using the reference identifier.

24. A method according to claim 23 wherein the reference identifier is assigned before initiating the first commercial transaction.

25. A method according to claim 23 wherein the reference identifier is assigned after initiating the first commercial transaction.

26. A method according to claim 23 wherein the reference identifier is assigned by the first processing element.

27. A method according to claim 23 wherein the reference identifier is assigned by the second processing element.

28. A method according to claim 26 wherein the reference identifier is passed to the second processing element by the first processing element.

29. A method according to claim 23 wherein the reference identifier is stored in the memory associated with the e-service layer in a manner which enables the reference identifier to be linked to the commercial object to which the reference identifier relates

30. A method according to claim 29 wherein the second processing element actuates storage of information representative of the commercial object in storage elements which are not accessible via the network, and the reference identifier is linked to the commercial object via said representative information.

31. A method according to claim 23 wherein the step of storing the reference identifier within a memory associated with the e-services layer includes the step o f storing the reference identifier in a memory which is not part of the e-services layer, but which is searchable by the e-services layer in a manner enabling retrieval of details of the second processing element.

32. A method according to claim 31 wherein the memory is provided at least by a storage element operable by the second processing element.

33. A method according to claim 23 wherein the second processing element is one of a plurality of processing elements which are equivalent *vis a vis* the commercial object.

34. A method according to claim 23 wherein the commercial object is represented to a processing element within the network as a combination of information and a further unique reference identifier.

35. A method according to claim 34 wherein the further unique reference identifier is representative of a further commercial object, forming a subset of the first-mentioned commercial object.

36. A method according to claim 23 wherein the first and second processing elements operate on behalf of first and second persons, the second person dealing in commercial objects of the type sought by the first transaction.

37. A method according to claim 23 wherein the details of the second processing element include an address of the second processing element within the network, by means of which the second processing element may be contacted via the network.

38. A method according to claim 30 wherein modification of the representative information of the commercial object is possible only by the second processing element, or with permission of the second processing element.

39. A method according to claim 38 wherein modification to the representative information by an element other than the second processing element is possible subsequent to an exchange of messages with the second processing element.

40. A method according to claim 38 further comprising the steps of:
completing a second transaction involving at least one of the first and second processing elements, the second transaction including the step of concluding a contract relating to the commercial object sought in the first transaction, wherein at least one of the first and second persons are a party to the contract;
modifying the memory associated with the e-service layer to enable the reference identifier to be linked to at least an address within the network of a processing element other than the second processing element.

41. A method according to claim 40 further comprising the step of enabling said processing element other than the second processing element to modify the representative information.

42. A method according to claim 40 wherein the second transaction involves at least the first processing element, and a third processing element operating on behalf of a third person, wherein the parties to the contract are at least the first and third persons, and subsequent to conclusion of the contract the address of the third processing element is linked to the reference identifier, and the third processing element is able to modify the representative information.

43. A method according to claim 40 wherein the second transaction involves at least the first and second processing elements, and wherein the parties to the contract are at least the first and second persons and subsequent to conclusion of the contract the address of the first processing element is linked to the reference identifier, and the first processing element is able to modify the representative information.

44. A method according to claim 40 wherein the second transaction involves at least the second processing element, and a third processing element operating on behalf of a third person, and wherein the parties to the contract are at least the second and third persons, and subsequent to conclusion of the contract the address of the third processing element is linked to the reference identifier, and the third processing element is able to modify the representative information.

45. An information technology network comprising at least a group of computing entities having storage and processing elements, computing entities of the group having a service layer of computing capability, wherein selected communications between computing entities of the group pass via the service layer, the service layer being adapted to:
retain within the network, a directory of available products and/or services, and addresses within the network of providers of such products or services, the directory beings searchable by any computing entity within the group; and
store, within a memory associated with the service layer, a reference identifier which is unique within the network, in a manner which enables the reference identifier to be linked to information representative of a commercial object comprised of one or more of the products or services in the directory.

46. An information technology network made up of at least a group of computing entities having storage and processing elements, computing entities of the group having a service layer of computing capability, wherein selected communications between computing entities of the group pass via the service layer, the service layer being adapted to:
retain within the network, a directory of available products and/or services, and addresses within the network of providers of such products or services, the directory beings searchable by any computing entity within the group; and
store, within a memory associated with the service layer, a reference identifier which is unique within the network, in a manner which enables the reference identifier to be linked to an address within the network of a computing entity via which products or services may be obtained.
